(19) **Europäisches Patentamt European Patent Office Office européen des brevets**

(11) **EP 1 947 592 A1**

(12) **EUROPEAN PATENT APPLICATION**

(43) Date of publication:
**23.07.2008 Bulletin 2008/30**

(51) Int Cl.:
***G06K 19/06*** (2006.01)

(21) Application number: **07100863.5**

(22) Date of filing: **19.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicants:
- **Multitel ASBL**
  **7000 Mons (BE)**
- **Université de Mons-Hainaut UMH**
  **7000 Mons (BE)**
- **CRIF/WTCM**
  **4102 Liège (BE)**
- **Vrije Universiteit Brussel VUB**
  **1050 Brussel (BE)**
- **Centexbel**
  **4650 Herve (Chaineux) (BE)**

(72) Inventors:
- **Delaigle, Jean-François**
  **B-7538 TOURNAI (BE)**
- **De Coninck, Joël**
  **B-7020 MESVIN (BE)**
- **Emmerechts, Carl**
  **B-4500 HUY (BE)**
- **Deklerck, Rudi**
  **B-1800 VILVOORDE (BE)**
- **Lemaire, Philippe**
  **B-4671 LAMOTTE-BLEGNY (BE)**

(74) Representative: **pronovem**
**Office Van Malderen**
**Avenue Josse Goffin 158**
**1082 Bruxelles (BE)**

(54) **Authentication method and device for protecting manufactured goods**

(57) The present invention is related to a method for the authentication of an article comprising the steps of generating identification data about an article, geometrical coding the identification data to form one geometric coding, incorporating the geometrical coding into a random pattern to form an authentication pattern, and embedding physically the authentication pattern onto the surface of the article to create a specific roughness.

Fig. 3

EP 1 947 592 A1

**Description**

**Field of the invention**

The present invention relates to a anti-counterfeiting method and device for protecting manufactured goods, and specially to an authentication method and an authentication device providing information to verify the authenticity of the goods.

**Background of the invention**

Counterfeiting is a major problem in the world of industry. Indeed, the Business Software Alliance estimates the cost of software piracy alone to be about $12 billion a year. The International Chamber of Commerce estimates that seven percent of the world trade is in counterfeit goods and that the counterfeit market is worth $ 350 billion. In 1982 the International Trade Commission estimated counterfeiting and piracy losses at 5.5 billion while in 1996 that number stood at $200 billion. Counterfeit automobile parts, like brake pads, cost the auto industry alone over $12 billion dollars in lost sales. The impact of counterfeiting on the world economy is clear, and a lot energy and money has been dedicated to fight against this problem.

Almost every commercial good, or article, is concerned by counterfeiting and piracy, and specially those which are associated with well known international brands. Counterfeiting and piracy affect intellectual property, pharmaceutical and medical equipment, luxury goods, automotive parts, software and multimedia, etc. The need for counterfeiting is clear: A brand proprietary manufactures an article for which it has a patent and for which he has invested some resources (research, money, time...). This article satisfies standards of quality and the manufacturer expects a high value-added. The counterfeiter duplicates the article and proceeds to mass production. The idea is to use the brand and original article notoriety, and the manufacturer know-how to sell the copied products. But the counterfeiter must invest a small amount of money to make good duplications in order to convince, or mislead, the buyer. The counterfeiter must spend much less money to produce each unit than the proprietary manufacturer, and should look for the highest sell value, both in order to guaranty the most elevated benefit.

The counterfeiter must maximize the benefits when duplicating manufactured goods, and for that he should:

- choose to copy goods with high added-values;
- minimize the effort, time and money, to produce the fakes.

Since the counterfeited article success is based on its ability to delude the customers, the approach to anti-counterfeiting must be centred on different techniques to raise the amount of effort to produce good quality copies, in this case "good quality" means enough quality to mislead the customer.

Almost everything that is visible today can be duplicated with small effort, and all the investigations in anti-counterfeiting have been done in:

1. Inserting visible or invisible tags with certain, and special, physical properties that need more and more effort to reproduce without some knowledge and experience. This is what we shall call the "tagging techniques";
2. Inserting invisible information in the object such that it could be only retrieved by some certified authenticators. This is what we shall call the "watermarking techniques", where the information lies in the object, but it is invisible and do not modify substantially neither the visual nor the functional properties of the object, and it cannot be retrieved unless some secret information is known.

The first approach is used extensively nowadays, indeed it is the mostly used approach. A lot of research has been done in order to develop more and more difficult-to-duplicate tags. The tagging techniques can be divided in two groups: "classical tagging techniques" based on the insertion of visible or less visible tags in the object to protect, in which the authentication is based on the presence of the tag. And "modern tagging techniques" using covert tags which are not directly readable by the human unless a reading device is used, and sometimes more intelligent tags. And here by "intelligent tags" we mean tags capable of delivering individualized information, for each object, and even capable of interchanging information with external devices or persons, commonly called real communicating tags.

The second approach, i.e. inserting invisible information, has been essentially used for the protection of digital and multimedia content such as digital images, movies, software, etc. But it is a challenge today trying to use those techniques on physical manufactured objects.

In the tagging techniques, the physical mark to be inserted in the manufactured article, can be visible and then the authentication process is validated by the presence of this mark. But since it is visible, it can sometimes, with little effort, be duplicated and then the anti-copy effort is broken. Therefore the idea should carried a very particular physical property, optical or magnetic, in order to make the duplication process difficult. Among those visible classical tagging techniques, also called "overt tagging techniques", we can mention embossed hologram stickers, laser surface embossing, High resolution Micro Printing and raised ink.

Optical technologies, or nanometric and micrometric direct surface marking, are techniques that allow patterning a surface at the micrometric and nanometric scale. The main solutions to leave or create on a surface a controlled geometrical 3D pattern are listed in table 1.

Table 1: non exhaustive list of creating a controlled geometrical 3D pattern on a surface.

| Technique | Precision (X-V-Z ; $\mu$m) | Advantage | drawback |
|---|---|---|---|
| Micromachining | 5-5-20 | Hard materials | Cost and low precision |
| Ink-jet printing | 50-50-50 | Cost; fast | Precision; use of ink |
| Laser ablation | 0.07-0.07-material depth | Material dependant | Cost, material depth, slow |
| Electrophotography | 50-50-50 | Fast; easy; cheap | Precision, material |
| Screen and PAD printing | 20- 20- 20 | Fast, easy, cheap | Precision; use of ink |
| Laser induced deposition | 1-1-1 | Precision | Cost; material limitation |

While most methods to shape surfaces at the nanoscale, i.e. thousand millionth of meter scale, are still in the research domain, very few are easy to apply on a wide scale. Most involves very expensive equipment and are material dependant. The patterning on the micrometric scale becomes easier and already some methods are widely used as the xerography, ink-jet, PAD or screen printing or photolithography. While all methods are material dependant is that they cannot apply to all materials with the same success some are very restricted by this problem. All the printing methods are leaving an ink pattern on a surface with the possible adhesion problems with this surface. For example the laser ablation is sublimating material on its surface. Depending on the power, set-up and laser characteristics this process can give very bad results.

The photolithography technique allows an easy addition of a pattern on a surface of microscopic precision on a rather large area since several decades. The method is rather inexpensive and is widely used to design electronic components and circuitry. It consists of depositing a photoresist polymer on a solid surface. By applying a UV light through a mask the selected area of the polymer are reticulated. Then, by use of solvent, the non-reticulated parts are removed, leaving a pattern of polymer pits on the original solid surface. The ensemble surface / reticulated photoresist resin is called "master". Then various technique of replication, e.g. moulding, enable to replicate the pattern of the master on other substrates. The limitation of the technique is optical and thus allows features of microns laterally and of any height as the height of the pattern elements is given by the spin-coating technique.

Over the past few years, research and industrial applications have been carried out in the field of nanoreplication, i.e. replicating nanometric structures on thermoplastic moulded objects, by the different institutes or companies. Resolutions of clearly below 50 nm were achieved with replication through hot embossing and injection moulding. Use was generally made of silicon mould inserts. Although these inserts are very hard in mechanical terms, they are prone to damage and will break in the same way as glass under notched stressing. For this reason, electroplated copies are frequently produced in nickel. When a relief structure is replicated by electroplating, a negative is first made, as with plastic moulding. In other words, a silicon wafer with pits, i.e. the original, gives rise to a nickel disc with elevations, i.e. the first generation. If this is placed directly in a replication tool, pits will form in the polymer again. These negative structures are difficult to access for a profilometric measurement. It is only through further replication, by electroplating, of the first electroplated copy that a nickel disc is obtained with a structure profile identical to that of the original, i.e. second generation. When this is used for replication, "mountains" result, and these elevations are easier to measure on account of their positive shape.

The polymer replication processes essentially differ on the basis of whether the replication material is a low-viscosity melt or fluid and whether it is cast onto or in a mould, or is formed locally through pressure in the form of a flowable substrate. Depending on the application involved, the range of replicated specimens extends from plastic discs with surface relief through to a 100 nm-thin polymer layer on a silicon chip or an embossed foil. In the case of hot embossing, a flat structured stamp is pressed onto a layer or a sheet of thermoplastic material that has been heated to above its glass transition temperature or Tg. While the outer appearance of the layer scarcely undergoes any change during embossing, the relief on the embossing stamp is transferred to the surface of the material being embossed in the form of a negative. Hot embossing is a relatively slow process. It is thus frequently only used for small-series production, prototype production and special-purpose applications. One example is nano-imprint-lithography for the lithographic manufacture of nano-components, where hot embossing is used to structure a spin-coated polymer film on the surface of a silicon chip.

In injection moulding, the temperature of the material being formed is generally considerably higher than with hot embossing. Since the hot melt is usually injected into a mould at a temperature below Tg, it is possible to achieve very short process times. Compact discs, for example, can be injection moulded with an overall process cycle of only 3 seconds.

There are a whole range of casting processes which are frequently only employed for experimental applications, prototype production or special-purpose applications. In its basic state, a precursor material suitable for casting is a viscous material that is cast in a mould. The material can then be hardened through evaporation of the solvent or through a crosslinking reaction initiated by heat or light chemistry. Sol-gel materials can be used to produce hard, glass-type replicas of nanostructures.

In roll embossing, in the same way as with hot embossing, a structured stamp, also known as a "shim" is pressed onto the surface of a thermoplastic material. The shim is mounted on a cylinder like a sleeve, and the cylinder is pressed on to a film in a rolling movement. The process runs continuously, since the cylinder runs over the film, and the relief on the curved stamp is transferred to the film which is supplied continuously by the roll embossing is a process that is used for simple decoration material as well as for security features on passports or bank notes.

Different profilometric measuring methods for Quality Control are available for measuring the surface relief. Atomic force microscopy (AFM) has become established in the scientific field, while mechanical profile measurement is standard in the semiconductor industry. While profilometers of this type are suitable for routine measurements, AFM allows structural details to be resolved. Extreme care is called for with plastics in both cases, since the specimen can be readily damaged during a measurement with a profilometer and, with AFM, there is a high susceptibility to error in the measurement of nonconducting specimens on account of electrostatic charges. Scanning electron microscopy (SEM) is particularly suitable for a qualitative assessment of the surface, while precise measurement of the structure height of CD data pits, for example, is very difficult, since the structures can only be viewed from above. It is thus virtually impossible to reveal undercuts or deviations from the ideal profile. This can, however, be done if the fracture edges of specimens can be viewed. Two methods to get round this problem were developed. Both are based on the production of a further replica. In other words, the structure to be measured is replicated with a material that is better suited to the measurement. If, instead of drawing up individual lines or complexes, a large-area grid is created with periodic lines, then it is possible to measure its optical diffraction efficiency and hence assess the mean quality of a grid. Measurements can be made in reflection or transmission mode and can be compared with simulations.

**Aims of the invention**

The aim of the present invention is to provide an authentication method and an authentication device which do not have the drawbacks of the state of the art.

The aim of present invention is to provide a method and a device enabling an easy authentication of an object or article, with high security, involving low cost equipment and material.

Particularly, the aim of the present invention is to provide a large number of information and/or authentication data about an article for the authentication of said article, information or data which are not directly accessible or readable, and which are difficult to reproduce.

More particularly, the aim of the present invention is to provide a method and a device for marking an article on a large area, with a high precision and no distortion, and without altering the article physical properties.

**Summary of the invention**

The present invention discloses a method for the authentication of an article comprising the steps of:

a) generating identification data about said article,
b) geometrical coding the identification data generated in step a) forming one geometric coding comprising individual elements,
c) generating a random pattern made of individual elements,
d) incorporating said geometrical coding obtained in step b) into said random pattern to form an authentication pattern.
e) embedding physically the authentication pattern onto the surface of said article.

Preferably, step e) is the transformation of the authentication pattern into a relief structure onto the surface of said article.

Furthermore the method of the present invention comprises one or more, alone or in combination, the following features:

- the identification data about said article comprises at least one traceability data about said article and a digital signature of the manufacturer of said article.
- the identification data about said article further comprises supplementary data comprising at least one electronic product code identifier and/or at least one manufacturer custom record.
- the identification data about said article are alphanumeric characters.
- the geometrical coding and the random pattern are at least two-dimensional coding thereby creating an at least two-dimensional authentication pattern.
- the individual elements forming the geometric coding and the random pattern are pixels and preferably black and white pixels.
- the said authentication pattern is a two-dimensional pixel pattern containing black and white pixels.
- the authentication pattern is a pattern containing pixels with a high pixel entropy.
- the geometric coding is incorporating into said random pattern at least one time.
- the geometric coding is incorporating into said random pattern at least two times, said geometric codings being randomly spaced from each other and with a random orientation.
- the step e) is performed during or after the manufacturing of said article.
- the step e) is the transformation of the two-dimensional authentication pattern in a three-dimensional structure onto the surface of said article.
- the step e) of embedding comprises the steps of :

    1- designing and producing a mask comprising an image of said authentication pattern as described in steps a) to d)
    2- making a master from said mask
    3- replication of said master on said article thereby performing step e).

- the steps 1) an 2) of the embedding is performed by a photolithography step.
- the method further comprises a step of:

    f) retrieving the information corresponding to the identification data and contained in the authentication pattern embedded onto the surface of said article.

- the authentication pattern is embedded onto the surface of moulded article.
- the authentication pattern is embedded onto the surface of thermoplastic moulded article.

The present invention discloses also a master used in the method for the authentication of an article, having on its surface a structure corresponding to an authentication pattern comprising at least one geometric coding in the form of individual element and corresponding to coding identification data about said article, said geometric coding being incorporated in a random pattern made of individual elements in order to form said identification pattern.

The present invention also discloses a mould used in the method for the authentication of an article, having on its surface a structure corresponding to the positive or negative image of a authentication pattern to be transferred to a surface of an article comprising at least one geometric coding in the form of individual elements corresponding to coding identification data about said article, said geometric coding being incorporated in a random pattern made of individual elements in order to form said identification pattern.

The present invention further discloses a device for retrieving the identification data about an article embedded onto said article according to the method for the authentication of said article, said device comprising

- optical means to visualize the authentication pattern embedded onto said article,
- illumination means to illuminate the surface of said article,
- acquisition means to verify that the image from the optical means contains the authentication pattern and
- image processing means to retrieve the information contained in the identification data about said article, wherein the angle between said optical means and illumination means is between 45 to 90 degrees to create contrast on the structure onto the surface of said article corresponding to the authentication pattern.

The present invention further discloses an article comprising on its surface a structure corresponding to an authentication pattern comprising at least one geometric coding in the form of individual elements corresponding to coding identification data about said article, said geometric coding being incorporated in a random pattern made of individual elements in order to form said identification pattern.

Furthermore, the article of the present invention comprises one or more, alone or in combination, the following features:

- the geometrical coding is an at least two-dimensional coding, and wherein the random pattern is an at least two-dimensional pixel pattern.
- the individual elements forming the geometric coding are pixels.
- the geometric coding is incorporating into said random pattern at least one time.
- the authentication pattern is a two-dimensional pixel pattern containing black and white pixels with high pixel entropy.
- the geometric coding incorporated in said random pattern is at a micrometric or nanometric scale.
- the article is made of mouldable material.
- the article is made of thermoplastic material.

**Brief Description of the drawings**

Figure 1 represents the Manufacturer Digital Signature (MDS) computation scheme.
Figure 2 represents a 2D pixel shape.
Figure 3 represents a 2D pixel shape embedded on a high entropy non-significant 2D pattern to form the micrometric authentication pattern.
Figure 4 represents the master used to physically embed the micrometric authentication pattern onto the surface on the article to protect.
Figure 5 represents two micrometric authentication patterns.
Figure 6 represents the micrometric authentication pattern replicated on a thermoplastic polymer.
Figure 7 represents the device for retrieving the authentication data about an article embedded onto the article.
Figure 8 represents the algorithmic decomposition for the image processing means of the device for retrieving the authentication data on the surface of an article.
Figure 9 represents the authentication process for distinguishing an original manufactured article from a counterfeited one.

**Detailed disclosure of the invention**

As the methods and device of the present invention are intended to be used for the protection of a whole batch of manufactured articles or objects, before starting the production, the manufacturer creates a "Tracing Information Frame" (TRIF) which contains the traceability data or identification information about the object or article. These data are preferably encoded using alphanumeric characters. The TRIF may contain mandatory data, which is the minimal information needed to have robust anti-counterfeiting feature, and some supplementary data which could be added for extra features.
In a preferred embodiment, the mandatory data could be encoded following the structure describe in table 2.

Table 2: TRIF Data

| Record name | Two-digit numerical ID |
| --- | --- |
| Manufacturer Name | 01 |
| Product EPC code | 02 |
| Production Date | 03 |
| Country of origin | 04 |
| Country of process | 05 |
| Routing | 06 |
| TRIF validity date | 07 |

The "manufacturer name" is the manufacturer name preferably in up to 20 alphanumeric characters. The "Product EPC code" is the 96 bits general identifier, or GID-96, according to EPC specifications described in "EPCG Tag Data Standards Version 1.1 Rev.1.24", EPCglobal, April 2004. Preferably, these 96 bits are written using 26 alphanumeric characters representing the 16 hexadecimal digits. The "production name" is the manufacturing date, preferably in month and year, of the object or article. The "Country of origin" is the numerical country identity, preferably according to the EAN.UCC specification described in "General EAN.UCC Specifications, Version 5.0", EAN International and the Uniform Code Council Inc, January 2004, for the country hosting the manufacturer company. The "Country of process" is the numerical country identity, preferably according to the EAN.UCC specification for the country hosting the manufacturing process. The "Routing" is the information for the object from the country of process to the country, or different countries, where the object will be distributed. The "TRIF validity date" is the date, preferably in month and year, beyond which the information contained in the TRIF is not reliable or not valid anymore for anti-counterfeiting purposes.

The TRIF can contain extra non mandatory data for traceability purposes. It could contain, for example, extra EPC identifiers as the "Global Trade Item Number" or SGITN, the "Serial Shipping Container Code" or SSCC, the "Global Location Number" or SGLN, the "Global Individual Asset Identifier" or GIA, and the "Global Returnable Asset" Identifier or GRAI, according to the EPC specifications in "EPCG Tag Data Standards Version 1.1 Rev.1.24", EPCglobal, April 2004, and according to the object itself.

In a preferred embodiment, the non mandatory data could be encoded following the structure describe in table 3.

Table 3: TRIF Data

| Record name | Two-digit numerical ID |
|---|---|
| SGTIN | 11 |
| SSCC | 12 |
| SGLN | 13 |
| GRAI | 14 |
| GIAI | 15 |
| Manufacturer custom records | 90 to 99 |

The EPC identifiers codes are preferably written with 16 or 24 alphanumeric characters representing the 16 hexadecimal digits.

An example of Tracing Information Frame with supplementary data is given in example 1.

Example 1 : TRIF

| | |
|---|---|
| 01 | NOKIA |
| 02 | A4423CFF5600234AA436EDC6 |
| 03 | 11/2005 |
| 04 | 54 |
| 05 | 690 |
| 06 | 690 QW 678 AS 23 56 LON PAR 54 |
| 07 | 12/2005 |
| 12 | 0007735AA324CA40026119FF |
| 90 | AA34C7 |

In the example 1, the TRIF contains a SSCC-96 EPC code referring to ID n°12 in the TRIF, and a custom record, n°90, used by the manufacturer to put the RGB colour code of the object .

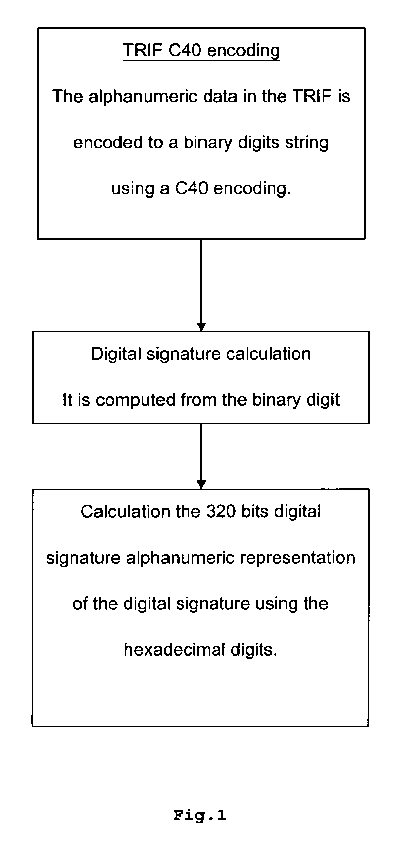

After generating the TRIF, the manufacturer generates a digital signature called the "Manufacturer Digital Signature" (MDS). Preferably, this signature is computed using the Digital Signature Standard (DSS) based on the Digital Signature Algorithm (DSA) specified by the publication "The Digital Signature Standard (DSS)", National Institute of Standards and Technology (NIST), FIPS Publication 186-2, January 2000. Preferably, the signing procedure is performed according to the scheme represented in figure 1. The alphanumeric data in the TRIF is encoded to a binary digits string using a C40 encoding according to table 4. Then the Digital Signature is computed from the binary digit before being represented in alphanumeric characters.

Table 4: C40 Encoding (source: *ISO/IEC 16022:2000 (E) Standard*)

| C40 Value | Basic Set Char | Decimal | Shift 1 Set Char | Decimal | Shift 2 Set Char | Decimal | Shift 3 Set Char | Decimal |
|---|---|---|---|---|---|---|---|---|
| 0 | Shift 1 | | NUL | 0 | ! | 33 | ' | 96 |
| 1 | Shift 2 | | SOH | 1 | " | 34 | a | 97 |
| 2 | Shift 3 | | STX | 2 | # | 35 | b | 98 |
| 3 | space | 32 | ETX | 3 | $ | 36 | c | 99 |
| 4 | 0 | 48 | EOT | 4 | % | 37 | d | 100 |

(continued)

| C40 Value | Basic Set | | Shift 1 Set | | Shift 2 Set | | Shift 3 Set | |
|---|---|---|---|---|---|---|---|---|
| | Char | Decimal | Char | Decimal | Char | Decimal | Char | Decimal |
| 5 | 1 | 49 | ENQ | 5 | & | 38 | e | 101 |
| 6 | 2 | 50 | ACK | 6 | ' | 39 | f | 102 |
| 7 | 3 | 51 | BEL | 7 | ( | 40 | g | 103 |
| 8 | 4 | 52 | BS | 8 | ) | 41 | h | 104 |
| 9 | 5 | 53 | HT | 9 | * | 42 | i | 105 |
| 10 | 6 | 54 | LF | 10 | + | 43 | j | 106 |
| 11 | 7 | 55 | VT | 11 | , | 44 | k | 107 |
| 12 | 8 | 56 | FF | 12 | - | 45 | l | 108 |
| 13 | 9 | 57 | CR | 13 | . | 46 | m | 109 |
| 14 | A | 65 | SO | 14 | / | 47 | n | 110 |
| 15 | B | 66 | SI | 15 | : | 58 | o | 111 |
| 16 | C | 67 | DLE | 16 | ; | 59 | p | 112 |
| 17 | D | 68 | DC1 | 17 | < | 60 | q | 113 |
| 18 | E | 69 | DC2 | 18 | = | 61 | r | 114 |
| 19 | F | 70 | DC3 | 19 | > | 62 | s | 115 |
| 20 | G | 71 | DC4 | 20 | ? | 63 | t | 116 |
| 21 | H | 72 | NAK | 21 | @ | 64 | u | 117 |
| 22 | I | 73 | SYN | 22 | [ | 91 | v | 118 |
| 23 | J | 74 | ETB | 23 | \ | 92 | w | 119 |
| 24 | K | 75 | CAN | 24 | ] | 93 | x | 120 |
| 25 | L | 76 | EM | 25 | ^ | 94 | y | 121 |
| 26 | M | 77 | SUB | 26 | _ | 95 | z | 122 |
| 27 | N | 78 | ESC | 27 | FNCI | | [ | 123 |
| 28 | O | 79 | FS | 28 | | | | | 124 |
| 29 | P | 80 | GS | 29 | | | ] | 125 |
| 30 | Q | 81 | RS | 30 | Upper Shift | | ~ | 126 |
| 31 | R | 82 | US | 31 | | | DEL | 127 |
| 32 | S | 83 | | | | | | |
| 33 | T | 84 | | | | | | |
| 34 | U | 85 | | | | | | |
| 35 | V | 86 | | | | | | |
| 36 | W | 87 | | | | | | |
| 37 | X | 88 | | | | | | |
| 38 | Y | 89 | | | | | | |
| 39 | Z | 90 | | | | | | |

Note: The relationship between the ASCII decimal value and the C40 value remain constant regardless of which ECI is effect.

In order to perform this computation, the manufacturer generates a pair of keys according to what it is specified in the publication "The Digital Signature Standard (DSS)", National Institute of Standards and Technology (NIST), FIPS Publication 186-2, January 2000. This key pair consists in a private Key, denoted "PrK" for computing the signature and that must be kept secret every time, and a public key "PuK" that is published for signature verification purposes.

An example of a TRIF with an MDS computed according to the different steps specified in figure 1 is given in example 2.

Example 2: A TRIF followed by its MDS

| 01 | NOKIA |
|---|---|
| 02 | A4423CFF5600234AA436EDC6 |

(continued)

| 03 | 11/2005 |
|---|---|
| 04 | 54 |
| 05 | 690 |
| 06 | 690 QW 678 AS 23 56 LON PAR |
| 54 | |
| 07 | 12/2005 |
| 12 | 0007735AA324CA40026119FF 90 AA34C7 |
| MDS | 00013734AEE34705CCE3 |
| 88867EEDFFDDE78AA87E | |
| 45064343884366AA5537 | |
| FFFFF455341009874611 | |

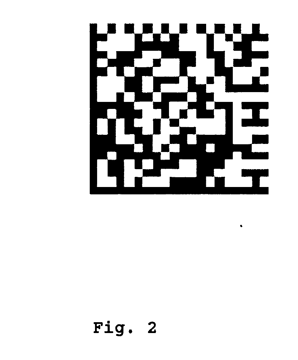

Once the TRIF, comprising the MDS, has been generated, the information contained in the TRIF/MDS, are coded geometrically during a step called "spatial coding". Preferably, this is done by using geometrical coding comprising individual elements. Preferably the geometrical coding is an at least two-dimensional shape and more preferably is a two-dimensional pixel shape for coding binary digits on a two-dimension surface in which the individual elements are pixels, such as shown in figure 2. This two-dimensional shape defines the "information unit". Any well-known two-dimension barcode is usable.

Once the complete TRIF/MDS has been spatially coded, the next step consists in generating a random infinite pattern made of the same individual elements, or pixels, found in the two-dimensional shape generated in the previous step.

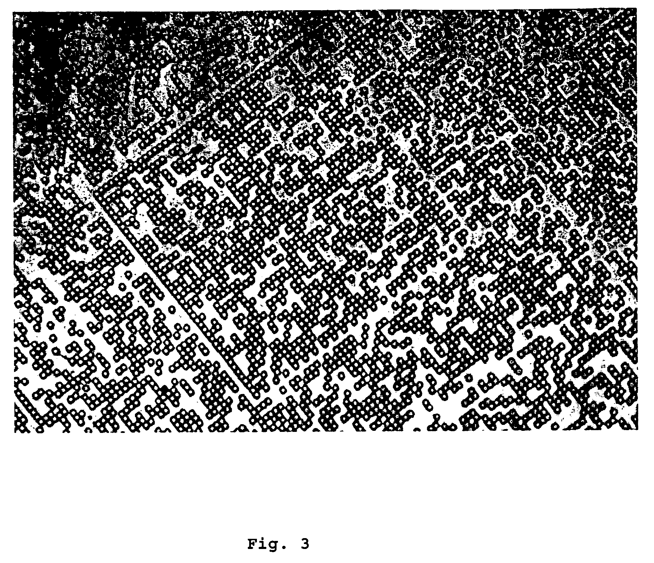

The two-dimensional shape coding the TRIF/MDS is positioned at least one time, preferably several times, in the random pattern, as shown in figure 3. If at least two two-dimensional shapes are incorporated in the random pattern, they preferably are sufficiently spaced from each other, preferably with a random orientation.

Referring to figure 3, the random pattern containing the geometrical coding, e.g. two-dimensional shapes coding the article information, preferably randomly oriented and spaced from each other, is called "authentication pattern" or "micrometric authentication pattern" (MAP). This authentication pattern is design as large as the surface of the object to be tagged.

Preferably, the authentication pattern, comprising the "information unit", and/or the random pattern may satisfy two conditions:

a. the two-dimensional shape should contain individual elements, preferably black and white pixels, or cells, with preferably a high pixel entropy. More preferably the individual elements entropy, or pixel entropy, should be as close as possible to 1.
b. the spatial distribution should be such that in general, every sub-region of the shape has also high entropy.

Usually, the entropy of an image, measured in bits per "symbol" (pixel value), can be calculated by the following formula:

$$ H(I) = -p_0 \log_2 p_0 - p_1 \log_2 p_1 $$

where $p_0$ denotes the probability for one pixel to be white on the whole image, and $P_1$ the probability that it is black. For a binary image in which each pixel is either white and is represented by the bit 0, or black and is represented by the bit 1, "I(x,y)" is equal to 0 or 1 depending on whether the pixel x,y is white or black.

In the present invention, the entropy is computed or estimated for the whole image containing the zone with the information unit and the zone containing only random data.

The authentication pattern, comprising the information unit drowned in the random pattern of individual elements, is then embedded, at the nanometric or micrometric scale, onto a specific part, or on all the surface of the object.

The object may be of any suitable material, e.g. plastic, glass, metal, or ceramic or a combination of such materials. Preferably, the object is made of a mouldable material, more preferably plastic material or thermoplastic material.

The method for the physical embedding of the identification information about an article onto the surface of the object could be any suitable method to create a controlled geometrical two-dimensional or three-dimensional pattern, preferably three-dimensional pattern structure, indistinguishable for the human eye from a usual surface.

To create controlled geometrical two-dimensional pattern, any suitable high resolution printing method can be used.

For a three-dimensional pattern marking, the physical embedding is the step in which the two-dimensional pixels of the authentication pattern are transformed in relief structures, either in pits or in elevations or a combination of both, onto the surface of the object. These pits or elevations may be of a single height, but also may be of different height.

To create the geometrical three-dimensional pattern structure, i.e. micro and/or nano-scale structures on the surface of the object, laser ablation, acid treatment or micro-percussion can be use, but preferably soft-lithography techniques may be used such as micro contact printing, replica molding, microtransfer molding, micromolding in capillaries and solvent-assisted micromolding, and more preferably, hot embossing, roll embossing, casting processes or injection moulding.

Preferably, the replication method of the micrometric authentication pattern uses photolithography.

Photolithography method allows creating a pattern above few tens of nanometer height. The technique can be extended to submicrons using complex optics and deep UV light source. The use of self-assembled monolayer allied with photolithography allows also chemical patterning.

Preferably, the physical embedding method of the authentication pattern onto the surface of the article comprises the steps of:

1- designing and producing a mask comprising the micrometric authentication pattern.
2- making a master from the mask
3- replication of the master on any suitable material.

The mask is made of any suitable material. It can be either a positive or a negative image of the micrometric authentication pattern.

In a preferred embodiment where the individual elements of the micrometric authentication pattern are black and white pixels, the mask comprises UV opaque cells corresponding to the black pixels and UV transparent cells corresponding to the white pixels.

The master is made from the mask by coating any suitable solid support, preferably silicium, with a photoresist resin, and applying a UV light through the mask to reticulate the exposed area of the polymer and dissolving by means of any suitable solvent the non-reticulated parts.

In a preferred embodiment, the master from the mask is made on basis of a silicium wafer. For this, the silicium wafer, preferably a 4" wafer, is spin-coated with SU8-2002 resin (CTS Chimie Tech-Services, France). This negative photoresist can be spin-coated at various thicknesses depending on the concentration used. Preferably a SU8-2002 solution is used because it gives a thickness of 2 $\mu$m at the edge of the silicium wafer and 2.68 $\mu$m at the center.

After the photolithography process, the master comprises a patterned relief structure on its surface which correspond to the micrometric authentication pattern. This relief structure can either comprises pits or elevations or a combination of both. The master can be either a positive or a negative image of the micrometric authentication pattern.

The replication of the authentication pattern can be done by using directly the master, but preferably the master is used to produced a mould, a mould insert, or a stamp.

More preferably, a nickel mould from the master is produced by electroplating. For this purpose, the silicon surface of the master is coated with a thin metallic layer by sputtering. Then after the nickel electroplating and releasing from the silicon surface of the master, the nickel mould insert is ready for replication.

For hot embossing or moulding, the moulds, mould inserts or stamps are prepared by casting an elastomer material, such as silicon, e.g. polydimethylsiloxane (PDMS), against the master, then by curing and peeling off the elastomer material.

The relief structure obtained on the surface of the article, and which corresponds to the authentication pattern, present no distortion and is of a high precision.

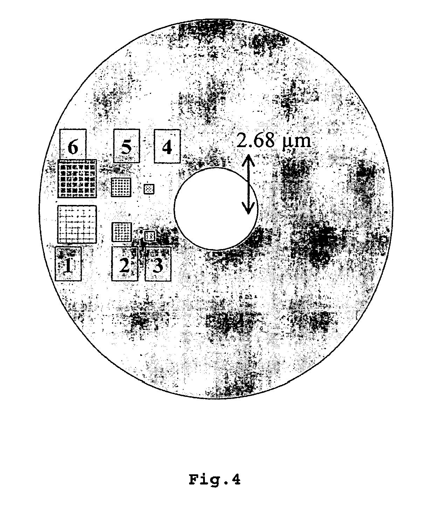

Referring to figure 4, the zone 1 to 6 represent the relief structure pattern corresponding to the authentication pattern at different sizes and with different pattern designs. These zones were made at different scale in order to check the minimum size to get good readable and decryptable pattern. The dimension of the information unit, and the corresponding size of the dots, i.e. individual elements, are given in table 5.

Table 5: information unit dimension and dots size regarding figure 4.

| Zones | Information Unit Size in pattern (mm) | Size of dots ($\mu$m) | Readibility |
|---|---|---|---|
| 1&6 | 1.76x1.76 | 40 | Perfect |
| 2&5 | 0.88 x 0.88 | 20 | Easy |
| 3&4 | 0.44 x 0.44 | 10 | Difficult |

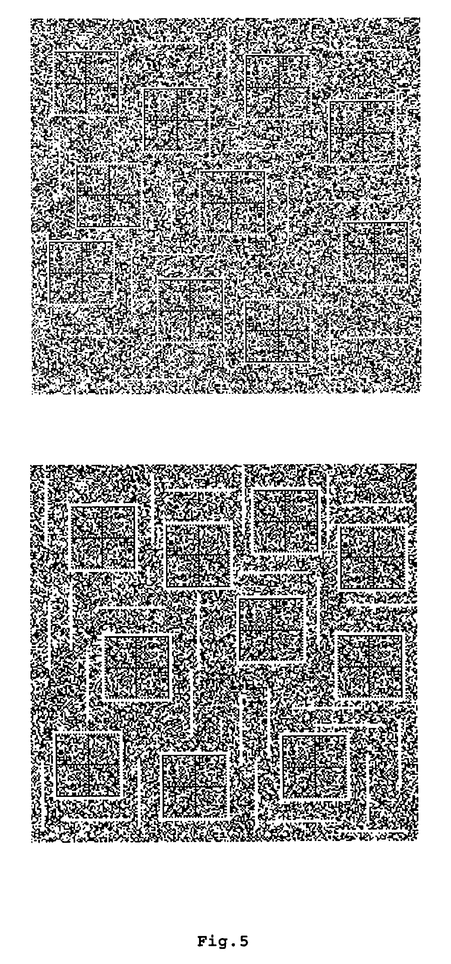

Referring to figure 5, it can be seen that the information unit is reproduced several times and is shadowed by noise. Preferably, the density and the heights of the individual elements, or dots, in the surrounding noise must be similar to the one of the information unit.

In figure 5, two authentication patterns have been tested in order to check the possible effects after replication of the pattern on thermoplastic materials. The top pattern shows better results, that is to say that, in the top pattern, it is more difficult to see by nacked eyes that something is present and the precision in the shape of individual elements, or dots, is better.

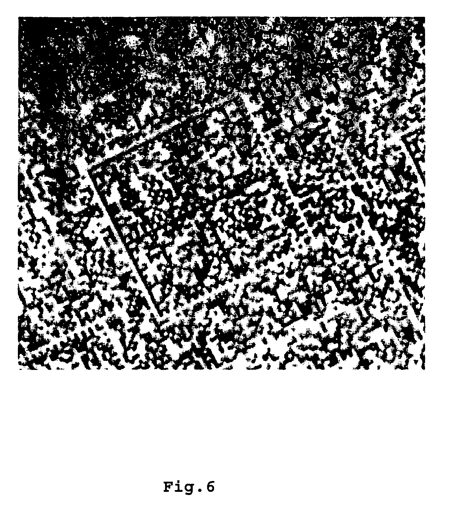

To retrieved the information contained on the surface of an article, comprising micrometric authentication pattern, a reading device should be used. The image obtained by such reading device is represented in figure 6. The image may be a positive or a negative picture of the micrometric authentication pattern.

Preferably, the reading device comprises optical means, illumination means, acquisition means and image processing means.

The optical means can be any device able to increase the size of the micrometric authentication pattern. Preferably the optical means comprises a camera and an objective allowing to increase the size of the article on the sensor of the camera. More preferably the objective is a macro objective.

The micrometric authentication pattern is fully visualized on the picture provided by the camera but the smallest detail of the pattern, an individual element, or a dot, of the identification unit is at least a half of a pixel. To decode the information contained in the pattern the objective is chosen depending on its magnification factor. For example, if we consider that for a two-dimensional barcode of 880mm square with 44x44 dots for a micrometric authentication pattern and for a camera with a sensor of 1024x768 pixels (6.4x4.8mm), the magnification will be between O.3x and 6x. It depends if the whole micrometric authentication pattern is displayed or if one dot is on a half of a pixel.

The illumination means is any suitable illumination device providing a light, preferably a light in the visible spectrum. Preferably, the illumination means is a fluorescent, or incandescent, or LED illumination device. Preferably such illumination device is controlled by a variable power supply. Preferably, an objective and/or a filter is added to prevent artefacts due to the inhomogeneity and/or the polarization of the light, the speckles due to the incident light reflection, or any other problems coming from the illumination.

The illumination creates shadows on the micrometric authentication pattern which help the image processing means to determine the profile of the relief structure. Thus, the module is adapted to have a good contrast on the picture. Consequently, it is not possible to have a coaxial illumination.

To get an image of the authentication pattern, the angle between the light beam of the illumination means and the optical means is crucial. This angle depends on the object, i.e. the aspect, shining or matt, the roughness, the colour, the type of material, which will vary the energy of the light reflected on the camera sensor, but also, this angle depends on the wave length of the illumination light used and on the depth of the pits, or the height of the elevations, of the authentication pattern structure on the object surface. The angle can vary between 45 and 90 degrees. Preferably the illumination means and the optical means are symmetric, or almost symmetric, in respect to the vertical of the object surface. "Almost symmetric" means that the respective angle between the vertical of the object surface and the optical means and illumination means should be sensibly equal but can differ from less than 10 degrees.

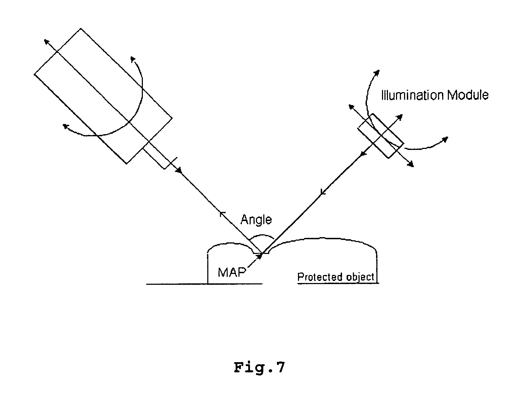

In a preferred embodiment, the illumination means are modifiable to offer many angles. When the best contrast is obtained on the image, the angle of the illumination means is fixed and not changed anymore (figure 7).

Preferably, for an information unit having two microns depth cells, the illumination means is darkfield illumination with LEDs. In this case, the shadows created on the micrometric authentication pattern are strongly visible and the contrast is very high.

The acquisition means verifies that the image contains fully the micrometric authentication pattern with enough accuracy for a decoding process. Preferably, the acquisition means comprises a CCD Black and White camera. Preferably, the acquisition means and the optical means are free of any movement.

Preferably, the position of the acquisition means and the optical means is fixed according to the article comprising authentication pattern structure and to the position and of the illumination means.

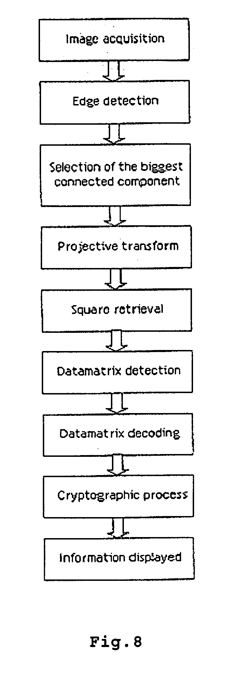

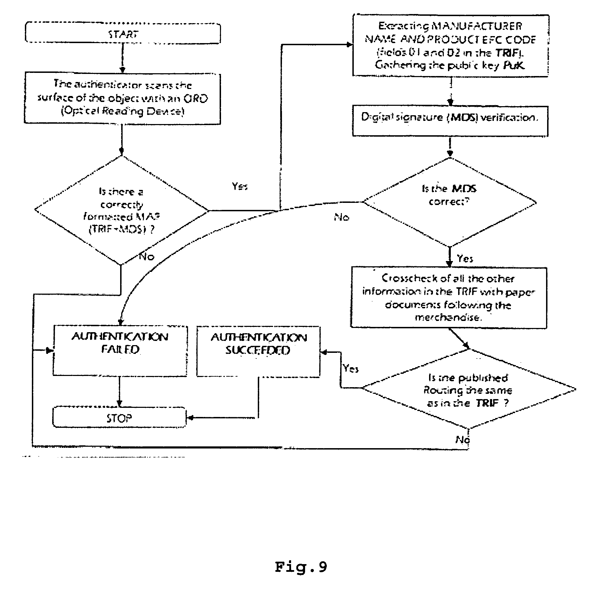

The image processing means is any means able to retrieve the information embedded on the article. As the way to embed the information on the article can be different, the image processing means should be adapted on each type of micrometric authentication pattern. For example, if the micrometric authentication pattern is a two-dimensional shape, the image processing means can find the two-dimensional shape in the image, detect the projective transformation if needed, and decode the information of the two-dimensional shape by mean of the scheme of figure 8. Preferably, the image processing means is able to display the TRIF by using the authentication protocol shown in figure 9.

The algorithmic decomposition for the image processing means, which is represented in figure 8, consist in first the digitalization of the image of the illuminated surface through the optical means, a microscopic optic device for example, then the detection of the edge of the authentication pattern (the frontier between white and black pixels), then the selection of the biggest connected component, which is, in a binary image, the regions of pixels with the same value that is connected (i.e. every pixel of the region touches at least in a corner another pixel of the region. So, the biggest connected component is the largest (in number of pixels) connected component in the image. Then a projective transformation may be performed, to rotate and reshape the image obtained by the optical means, before the square retrieval, to retrieve and extract, the information unit from the authentication pattern, and the detection and decoding of the geometrical shape, to confirm that the square retrieved is the information unit. A cryptographic process extracts, and decodes the information contained in the information unit, and are displayed, for example on a computer screen.

## Claims

1. Method for the authentication of an article comprising the steps of:

   a) generating identification data about said article,
   b) geometrical coding the identification data generated in step a) forming one geometric coding comprising individual elements,
   c) generating a random pattern made of individual elements,
   d) incorporating said geometrical coding obtained in step b) into said random pattern to form an authentication pattern.
   e) embedding physically the authentication pattern onto the surface of said article.

2. Method according to claim 1, wherein said step e) is the transformation of the authentication pattern into a relief structure onto the surface of said article.

3. Method according to claim 1 or claim 2, wherein the identification data about said article comprises at least one traceability data about said article and a digital signature of the manufacturer of said article.

4. Method according to any of the preceding claims, wherein the identification data about said article further comprises supplementary data comprising at least one electronic product code identifier and/or at least one manufacturer custom record.

5. Method according to any of the preceding claims, wherein the identification data about said article are alphanumeric characters.

6. Method according to any of the preceding claims, wherein the geometrical coding and the random pattern are at least two-dimensional coding thereby creating an at least two-dimensional authentication pattern.

7. Method according to any of the preceding claims wherein the individual elements forming the geometric coding and the random pattern are pixels and preferably black and white pixels.

8. Method according to any of the preceding claims, wherein said authentication pattern is a two-dimensional pixel pattern containing black and white pixels.

9. Method according to claim 8, wherein said authentication pattern is a pattern containing pixels with a high pixel entropy.

10. Method according to any of the preceding claims, wherein the geometric coding is incorporating into said random pattern at least one time.

11. Method according to any of the preceding claims, wherein the geometric coding is incorporating into said random pattern at least two times, said geometric codings being randomly spaced from each other and with a random orientation.

**12.** Method according to any of the preceding claims, wherein the step e) is performed during or after the manufacturing of said article.

**13.** Method according to any one of the preceding claims 6 to 12, wherein said step e) is the transformation of the two-dimensional authentication pattern in a three-dimensional structure onto the surface of said article.

**14.** Method according to claim 13, wherein the step e) of embedding comprises the steps of :

1- designing and producing a mask comprising an image of said authentication pattern as described in steps a) to d)
2- making a master from said mask
3- replication of said master on said article thereby performing step e)

**15.** Method according to claim 14, wherein the steps 1) an 2) is performed by a photolithography step.

**16.** Method according to any of the preceding claims further comprising the step of:

f) retrieving the information corresponding to the identification data and contained in the authentication pattern embedded onto the surface of said article.

**17.** Method according to any of the preceding claims wherein said authentication pattern is embedded onto the surface of moulded article.

**18.** Method according to any of the preceding claims wherein said authentication pattern is embedded onto the surface of thermoplastic moulded article.

**19.** Master used in the method according to any of the preceding claims having on its surface a structure corresponding to an authentication pattern comprising at least one geometric coding in the form of individual element and corresponding to coding identification data about said article, said geometric coding being incorporated in a random pattern made of individual elements in order to form said identification pattern.

**20.** Mould used in the method according to the preceding claims 1 to 18 having on its surface a structure corresponding to the positive or negative image of a authentication pattern to be transferred to a surface of an article comprising at least one geometric coding in the form of individual elements corresponding to coding identification data about said article, said geometric coding being incorporated in a random pattern made of individual elements in order to form said identification pattern.

**21.** Device for retrieving the identification data about an article embedded onto said article according any of the preceding claims 1 to 18, said device comprising
optical means to visualize the authentication pattern embedded onto said article,
illumination means to illuminate the surface of said article,
acquisition means to verify that the image from the optical means contains the authentication pattern and
image processing means to retrieve the information contained in the identification data about said article
Wherein the angle between said optical means and illumination means is between 45 to 90 degrees to create contrast on the structure onto the surface of said article corresponding to the authentication pattern.

**22.** An article comprising on its surface a structure corresponding to an authentication pattern comprising at least one geometric coding in the form of individual elements corresponding to coding identification data about said article, said geometric coding being incorporated in a random pattern made of individual elements in order to form said identification pattern.

**23.** An article according to claim 22, wherein the geometrical coding is an at least two-dimensional coding, and wherein the random pattern is an at least two-dimensional pixel pattern.

**24.** An article according to any of the claims 22 or 23, wherein the individual elements forming the geometric coding are pixels.

**25.** An article according to any of the claims 22 to 24, wherein the geometric coding is incorporating into said random pattern at least one time.

**26.** An article according to any of the claims 22 to 25, wherein the authentication pattern is a two-dimensional pixel pattern containing black and white pixels with high pixel entropy.

**27.** An article according to any of the claims 22 to 26, wherein geometric coding incorporated in said random pattern is embedded onto the surface of said article at a micrometric or nanometric scale.

**28.** An article according to any of the claims 22 to 27, wherein said article is made of mouldable material.

**29.** An article according to claim 29, wherein said article is made of thermoplastic material.

TRIF C40 encoding

The alphanumeric data in the TRIF is encoded to a binary digits string using a C40 encoding.

Digital signature calculation

It is computed from the binary digit

Calculation the 320 bits digital

signature alphanumeric representation

of the digital signature using the

hexadecimal digits.

Fig.1

Fig. 2

Fig. 3

Fig.4

Fig.5

Fig.6

Illumination Module

Angle

MAP

Protected object

Fig.7

Image acquisition

⇓

Edge detection

⇓

Selection of the biggest
connected component

⇓

Projective transform

⇓

Square retrieval

⇓

Datamatrix detection

⇓

Datamatrix decoding

⇓

Cryptographic process

⇓

Information displayed

Fig.8

Fig.9

**European Patent Office**

# EUROPEAN SEARCH REPORT

Application Number

EP 07 10 0863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/098540 A (MEDIASEC TECHNOLOGIES GMBH [DE]; ZHAO JIAN [US]; PICARD JUSTIN [US]; T) 27 November 2003 (2003-11-27)<br>* abstract *<br>* page 13, line 1 - line 27 *<br>* page 26, line 10 - line 22 *<br>* page 30, line 3 - page 34, line 4 *<br>* page 36, line 30 - page 37, line 4 *<br>* figures 1,10,11 *<br>----- | 1-29 | INV.<br>G06K19/06 |
| A | WO 99/04364 A (ASSURE SYSTEMS INC [US]; DOLJACK FRANK A [US]) 28 January 1999 (1999-01-28)<br>* page 17, line 1 - page 18, line 14 *<br>* page 21, line 1 - line 14 *<br>* figure 3 *<br>----- | 1-29 | |
| A | WO 93/22745 A (CIAS INC [US]) 11 November 1993 (1993-11-11)<br>* abstract *<br>* page 16, paragraph 3 - page 31, paragraph 6 *<br>----- | 1-29 | |
| A | FR 2 850 774 A (OPTICOM A G [FR]) 6 August 2004 (2004-08-06)<br>* abstract *<br>* page 5, line 4 - page 8, line 26 *<br>* figures 1-3 *<br>----- | 1-29 | TECHNICAL FIELDS SEARCHED (IPC)<br><br>G06K<br>G07D<br>G07F |

The present search report has been drawn up for all claims

| Place of search | Date of completion of the search | Examiner |
|---|---|---|
| The Hague | 19 September 2007 | Jacobs, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 0863

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2007

| Patent document cited in search report | | Publication date | Patent family member(s) | | Publication date |
|---|---|---|---|---|---|
| WO 03098540 | A | 27-11-2003 | CN | 1669046 A | 14-09-2005 |
| | | | EP | 1514227 A1 | 16-03-2005 |
| | | | JP | 2005525769 T | 25-08-2005 |
| | | | MX | PA04011277 A | 22-02-2006 |
| | | | US | 2006109515 A1 | 25-05-2006 |
| WO 9904364 | A | 28-01-1999 | AT | 268486 T | 15-06-2004 |
| | | | AU | 8577898 A | 10-02-1999 |
| | | | CA | 2297683 A1 | 28-01-1999 |
| | | | DE | 69824291 D1 | 08-07-2004 |
| | | | DE | 69824291 T2 | 02-06-2005 |
| | | | EP | 0996928 A1 | 03-05-2000 |
| | | | ES | 2221710 T3 | 01-01-2005 |
| | | | US | 6442276 B1 | 27-08-2002 |
| WO 9322745 | A | 11-11-1993 | AU | 1895992 A | 29-11-1993 |
| | | | DE | 69232519 D1 | 02-05-2002 |
| | | | EP | 0647342 A1 | 12-04-1995 |
| FR 2850774 | A | 06-08-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- EPCG Tag Data Standards Version 1.1 Rev.1.24. *EPCglobal,* April 2004
- General EAN.UCC Specifications, Version 5.0. *EAN International and the Uniform Code Council Inc,* January 2004
- The Digital Signature Standard (DSS. *FIPS Publication 186-2,* January 2000